# DEMANDE DE BREVET EUROPEEN

(11) **EP 2 249 592 A1**
(43) Date de publication de la demande: **10.11.2010**
(21) Numéro de dépôt: 09305405.4
(22) Date de dépôt: 06.05.2009
(51) Int. Cl.: H04W 8/02, H04W 8/18, H04W 24/08, G06Q 30/00

(54) **Procédé et dispositif d'obtention d'informations statistiques relatives à des usagers fréquentant des lieux situés dans la zone de couverture radio d'au moins un réseau de communication sans fil**

(71) Demandeur: Alcatel Lucent, 75008 Paris (FR)
(72) Inventeur: Hedarchet, Stéphane, 75008, Paris (FR); Aghasaryan, Armen, 91620 Nozay (FR)
(74) Mandataire: Hedarchet, Stéphane

(57) **Abrégé**

Un procédé est dédié à l'obtention d'informations statistiques relatives à des usagers de terminaux de communication radio. Ce procédé comprend :
- une étape i) consistant à déterminer dans des moyens de stockage (MS1, MS2), stockant des identifiants d'usagers, associés à des profils d'usagers définis par au moins un attribut, en correspondance de positions de terminaux de communication radio de ces usagers, propres à se connecter à au moins un réseau de communication sans fil (R1, R2), les identifiants des usagers dont les terminaux ont été présents dans au moins une partie de la zone de couverture de ce réseau (R1, R2),
- une étape ii) consistant à déterminer les profils d'usagers associés aux identifiants d'usagers déterminés, et
- une étape iii) consistant à calculer pour cette partie de zone de couverture des informations statistiques sur les usagers qui ont été présents dans cette partie, en fonction d'au moins un attribut des profils d'usagers déterminés dans cette partie de zone de couverture.

## Description

L'invention concerne l'obtention et l'utilisation d'informations statistiques relatives à des usagers qui fréquentent des lieux qui sont situés dans la zone de couverture d'au moins un réseau de communication sans fil.

Dans certains domaines, comme par exemple celui de l'affichage (d'informations ou de publicités), on utilise des moyens d'affichage, comme par exemple des panneaux publicitaires ou des écrans (éventuellement embarqués dans des véhicules), pour proposer des informations, des produits ou des services à des passants ou des passagers. L'inconvénient principal de cette méthode réside dans le fait qu'elle ne prend pas précisément en compte les types (ou profils) des personnes qui sont situées momentanément dans les zones d'affichage, et donc qu'il peut arriver que certaines informations ou publicités affichées n'intéressent absolument pas les personnes qui les voient.

Il a certes été proposé de modifier certaines informations ou publicités affichées en fonction de paramètres externes, comme par exemple le jour de la semaine, l'heure de la journée ou la météorologie, mais cela ne permet toujours pas de tenir compte des types (ou profils) des personnes qui sont situées momentanément dans les zones d'affichage.

Il a également été proposé d'adresser spécifiquement à des personnes munies d'un terminal de communication radio, disposant d'un écran d'affichage, des publicités qui présentent une relation forte avec leur localisation (par exemple pour les avertir de l'existence d'un magasin ou service particulier à proximité, qui peut les intéresser compte tenu de leurs profils d'usagers). Mais, d'une part, cela impose que le terminal de la personne concernée soit allumé (en mode connecté ou en veille), et d'autre part, cela ne concerne que des personnes de façon individualisée et non des groupes de personnes qui fréquentent un même lieu.

Par ailleurs, aucun dispositif ou procédé connu ne permet d'obtenir des connaissances précises, éventuellement de façon dynamique, sur des personnes qui fréquentent certains lieux et donc qui sont susceptibles de visualiser des messages d'information et/ou des messages publicitaires dans ces lieux.

L'invention a donc pour but d'améliorer la situation.

Elle propose à cet effet un procédé, dédié à l'obtention d'informations statistiques relatives à des usagers de terminaux de communication radio (pouvant se connecter à au moins un réseau de communication sans fil), et comprenant :
- une étape i) consistant à déterminer dans des moyens de stockage (où sont stockés des identifiants d'usagers, associés à des profils d'usagers définis par au moins un attribut, en correspondance de positions géographiques où ont été situés les terminaux de communication radio de ces usagers), les identifiants des usagers dont les terminaux ont été (ou sont toujours) présents dans au moins une partie de la zone de couverture du réseau,
- une étape ii) consistant à déterminer les profils d'usagers associés aux identifiants d'usagers déterminés, et
- une étape iii) consistant à calculer pour la partie de zone de couverture considérée des informations statistiques sur les usagers qui ont été (ou sont toujours) présents dans cette partie, en fonction d'au moins un attribut des profils d'usagers qui ont été déterminés dans cette partie de zone de couverture.

On notera que de telles informations statistiques peuvent alors permettre, par exemple, de déduire des audiences par groupes de profil(s) d'usagers, en vue, par exemple, de qualifier des réseaux de panneaux d'affichage pendant ou après une campagne publicitaire. Ces mesures d'audience peuvent ensuite être utilisées pour estimer l'efficacité publicitaire d'une campagne publicitaire, éventuellement en temps réel, voire même pour effectuer des ajustements stratégiques.

Le procédé selon l'invention peut comporter d'autres caractéristiques qui peuvent être prises séparément ou en combinaison, et notamment :
- il peut en outre comprendre une étape iv) consistant à générer un fichier de données cartographiques affichables et représentatives d'informations statistiques dans au moins une partie de zone de couverture ;
- les informations statistiques peuvent par exemple constituer des profils des parties de zone de couverture ;
- à l'étape i) on peut déterminer dans les moyens de stockage les identifiants des usagers dont les terminaux ont été (ou sont toujours) présents pendant une partie au moins d'au moins un intervalle de temps choisi dans au moins une partie d'une zone de couverture du réseau ;
   ➢ l'intervalle de temps choisi peut être un intervalle ayant débuté à un instant antérieur choisi et qui vient tout juste de se terminer ;
- en présence d'usagers abonnés auprès d'au moins deux réseaux de communication sans fil, on peut calculer lors de l'étape iii), pour au moins une partie de zone de couverture commune aux réseaux, des informations statistiques sur les usagers qui ont été (ou sont toujours) présents dans cette partie commune, en fonction d'au moins un attribut des profils d'usagers qui ont été déterminés dans cette partie de zone de couverture commune ;
- à l'étape iii) on peut calculer pour une partie de zone de couverture considérée au moins un profil moyen d'usagers en fonction d'une partie commune des profils d'usagers qui ont été déterminés dans cette partie de zone de couverture ;
- à l'étape iii) on peut calculer des informations statistiques constituant des histogrammes.

L'invention propose également un dispositif de traitement, pour l'obtention d'informations statistiques relatives à des usagers de terminaux de communication radio, et comprenant pour ce faire des moyens de calcul agencés pour:
- déterminer dans des moyens de stockage (stockant des identifiants d'usagers, associés à des profils d'usagers définis par au moins un attribut, en correspondance de positions de terminaux de communication radio de ces usagers (propres à se connecter au réseau de communication sans fil)), les identifiants des usagers dont les terminaux ont été (ou sont toujours) présents dans au moins une partie de la zone de couverture du réseau,
- déterminer les profils d'usagers associés aux identifiants d'usagers déterminés, et
- calculer pour la partie de zone de couverture considérée des informations statistiques sur les usagers qui ont été (ou sont toujours) présents dans cette partie, en fonction d'au moins un attribut des profils d'usagers déterminés dans cette partie de zone de couverture.

Le dispositif selon l'invention peut comporter d'autres caractéristiques qui peuvent être prises séparément ou en combinaison, et notamment :
- ses moyens de calcul peuvent être agencés de manière à calculer des informations statistiques qui constituent des profils des parties de zone de couverture ;
- ses moyens de calcul peuvent être agencés de manière à déterminer dans les moyens de stockage les identifiants des usagers dont les terminaux ont été présents pendant une partie au moins d'au moins un intervalle de temps choisi dans au moins une partie d'une zone de couverture du réseau ;
   ➢ l'intervalle de temps choisi peut par exemple être un intervalle qui a débuté à un instant antérieur choisi et qui vient tout juste de se terminer ;
- ses moyens de calcul peuvent être agencés de manière à calculer pour une partie de zone de couverture au moins un profil moyen d'usagers en fonction d'une partie commune au moins des profils d'usagers déterminés dans cette partie de zone de couverture ;
- ses moyens de calcul peuvent être agencés de manière à calculer des informations statistiques constituant des histogrammes.

L'invention concerne également un système, dédié à la génération de fichiers de données cartographiques relatives à au moins une partie d'une zone de couverture d'au moins un réseau de communication sans fil, et comprenant au moins un dispositif de traitement du type de celui présenté ci-avant et associé à au moins un réseau, et des moyens de génération agencés pour générer un fichier de données cartographiques représentatives d'informations statistiques dans au moins une partie d'une zone de couverture du réseau, déterminées par au moins un dispositif de traitement, et qui sont propres à être affichées.

Par ailleurs, en présence d'usagers abonnés auprès d'au moins deux réseaux de communication sans fil, le système peut comprendre des dispositifs de traitement associés respectivement à ces réseaux, et des moyens d'agrégation agencés de manière à calculer pour au moins une partie de zone de couverture commune aux réseaux des informations statistiques sur les usagers qui ont été présents dans cette partie commune, à partir des informations statistiques qui ont été calculées par les dispositifs de traitement dans les parties de zone de couverture des réseaux.

L'invention est particulièrement bien adaptée, bien que non limitativement, à l'optimisation de campagnes publicitaires sur des moyens d'affichage ou à l'analyse a posteriori de l'impact de publicités affichées dans des lieux choisis.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple de réalisation de système selon l'invention comprenant deux dispositifs de traitement selon l'invention associés respectivement à deux réseaux de communication radio, et
- les figures 2 à 4 illustrent de façon schématique des premier, deuxième et troisième exemples d'histogramme représentatifs du pourcentage d'usagers présents dans une partie d'une zone de couverture en fonction respectivement de la catégorie d'âge, du genre (masculin ou féminin) et de la catégorie professionnelle.

Les dessins annexés pourront non seulement servir à compléter l'invention, mais aussi contribuer à sa définition, le cas échéant.

L'invention a notamment pour objet d'offrir un procédé et un dispositif (Di) associé permettant d'obtenir des informations statistiques relatives à des usagers qui fréquentent des lieux situés dans la zone de couverture d'au moins un réseau de communication sans fil (Ri).

Dans ce qui suit, on considère à titre d'exemple non limitatif que les usagers sont équipés de terminaux de communication radio de type téléphone mobile (ou cellulaire) pouvant se connecter à au moins un réseau de communication sans fil (Ri), par exemple de type cellulaire. Mais, l'invention n'est limitée ni à ce type de réseau de communication sans fil, ni à ce type de terminal de communication radio. Elle concerne en effet tout type de réseau de communication sans fil capable de déterminer les positions des terminaux de communication radio qui sont connectés à lui, et donc tout type de terminal de communication radio pouvant se connecter à un réseau de communication sans fil et dont la position peut être déterminée par tout moyen connu de l'homme de l'art. On notera que la granularité de la localisation d'un terminal d'usager dépend notamment des dimensions des cellules (ou micro cellules) d'un réseau radio. On notera également qu'une micro-cellule est, ici, une cellule de (très) petites dimensions, comme par exemple une « pico cellule » ou une « femto cellule ».

Par conséquent, l'invention concerne notamment les réseaux dits « 3G », comme par exemple les réseaux de type UMTS ou CDMA 2000, et les réseaux de type GSM. Par ailleurs, l'invention concerne notamment les téléphones mobiles (ou cellulaires), les ordinateurs portables et les assistants personnels numériques (ou PDAs) capables de communiquer via une liaison radio.

Par ailleurs, on considère dans ce qui suit, à titre d'exemple non limitatif, que les informations statistiques calculées grâce à l'invention sont destinées à optimiser, automatiquement ou sous le contrôle d'une personne habilitée, des campagnes d'information ou publicitaires sur des moyens d'affichage (de tous types) implantés dans des (sous) cellules (éventuellement mobiles lorsque le point d'accès est un véhicule). Mais, l'invention n'est pas limitée à ce type d'application.

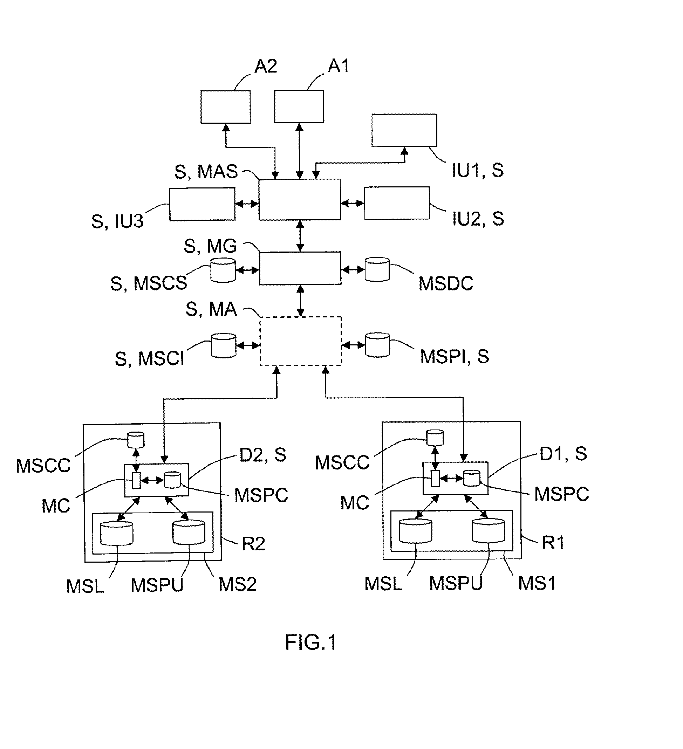

On a schématiquement représenté sur la figure 1 un exemple de réalisation d'un système S permettant de mettre en oeuvre un procédé selon l'invention.

On notera que dans l'exemple non limitatif illustré, le système S est couplé à deux réseaux (de communication sans fil) Ri (i = 1 ou R2) par l'intermédiaire de deux dispositifs de traitement Di selon l'invention qui font partie de lui (S) et qui sont associés respectivement à ces deux réseaux Ri. Mais, l'invention n'est pas limitée à cet exemple de système S. Elle concerne en effet tout système S comprenant, notamment, au moins un dispositif (de traitement) Di selon l'invention associé à au moins un réseau Ri. Par conséquent, un système S selon l'invention pourra ne comporter qu'un seul dispositif Di ou bien plus de deux (par exemple trois ou quatre, voire plus encore).

Le procédé selon l'invention comprend au moins trois étapes principales.

Une première étape principale (i) consiste à déterminer les identifiants des usagers dont les terminaux (ici des téléphones mobiles) ont été (ou sont toujours) présents dans au moins une partie de la zone de couverture d'un réseau Ri. Cette détermination se fait dans des moyens de stockage MSi où se trouvent stockés des identifiants d'usagers, associés à des profils d'usagers définis par au moins un attribut, en correspondance de positions de terminaux de ces usagers.

Comme cela est illustré non limitativement, les moyens de stockage MSi peuvent par exemple faire partie des réseaux Ri. Dans ce cas, les moyens de stockage MSi peuvent par exemple être, au moins en partie, les équipements de réseau MSL qui sont appelés HLR (« Home Location Register ») et VLR (« Visited Location Register ») et dans lesquels sont stockées les informations de position des « usagers » respectivement non itinérants (domicile) et itinérants (visiteurs). Ces équipements MSL sont des bases de données auxquelles on peut par exemple accéder via un serveur du réseau Ri considéré, par exemple de type GMLC (« Gateway Mobile Location Center ») dans le cas d'un réseau de type GSM.

Cette première étape principale (i) peut par exemple être mise en oeuvre par des moyens de calcul MC d'un dispositif Di associé à un réseau Ri.

On entend ici par « associé à un réseau Ri » le fait soit de faire partie du réseau Ri (comme illustré), soit d'être connecté au réseau Ri et de pouvoir accéder à certaines de ses fonctionnalités, comme par exemple ses informations de localisation (ou position) d'usagers.

Les moyens de calcul MC peuvent par exemple adresser au serveur GMLC une requête lui demandant de communiquer tous les identifiants des usagers qui ont été (ou sont toujours) présents dans une partie au moins de la zone de couverture du réseau Ri considéré. Le serveur GMLC se charge alors de déterminer dans les équipements MSL (par exemple le HLR et/ou le VLR) chaque identifiant d'usager qui a été (ou est) présent dans une (sous) cellule identifiée dans la requête, ainsi que l'identifiant de (sous) cellule associé et l'instant où le terminal de l'usager identifié a été détecté dans la (sous) cellule identifiée.

On entend ici par « partie de zone de couverture » une ou plusieurs cellules ou micro cellules désignées respectivement par des identifiants et participant à la (ou une) zone de couverture d'un réseau Ri.

En réponse à une requête, les moyens de calcul MC reçoivent du serveur (par exemple de type GMLC) un ou plusieurs multiplets comportant chacun au moins un identifiant de (micro) cellule, un identifiant d'usager et une heure (indiquant l'instant où le terminal de l'usager identifié a été détecté dans la (micro) cellule identifiée).

Il est important de noter que dans le cadre d'une application en temps réel les moyens de calcul MC peuvent éventuellement requérir auprès du serveur GMLC la détermination en temps réel de tous les identifiants des usagers qui sont présents à l'instant considéré dans au moins une (micro) cellule.

Il est également important de noter que lors de la première étape principale (i) la détermination des identifiants des usagers peut être éventuellement limitée à un ou plusieurs intervalles de temps choisis et dans au moins une partie d'une zone de couverture d'un réseau Ri. Ainsi, on peut par exemple rechercher tous les usagers qui sont présents dans une (micro) cellule un jour de semaine ouvré (lundi au vendredi) et/ou entre 8H00 et 13H00, ou bien un jour de week-end (samedi ou dimanche) et/ou entre 14H00 et 20H00, ou encore un jour de semaine ouvré entre 12H00 et 14H00 et/ou entre 19H00 et 00H00. Dans le cadre d'une application en temps réel, l'intervalle de temps choisi peut par exemple avoir débuté à un instant antérieur choisi (par exemple deux minutes ou 30 secondes auparavant) et venir tout juste de se terminer.

On notera que les moyens de calcul MC peuvent par exemple se charger d'agréger des informations relatives à la présence d'usagers à un instant donné dans une (micro) cellule pendant un intervalle de temps relativement long ou bien pendant plusieurs intervalles de temps relativement courts. En effet, un équipement de type GMLC ne fournit en général que les identifiants des usagers qui se trouvent situés à un instant donné dans une cellule donnée.

On notera également que l'on peut envisager que des informations relatives à la présence d'usagers à un instant donné dans une (micro) cellule ne soient automatiquement transmises aux moyens de calcul MC qu'à chaque fois que survient une modification de présence (entrée/sortie d'usager(s)) dans cette (micro) cellule.

Une deuxième étape principale (ii) du procédé selon l'invention consiste à déterminer les profils d'usagers qui sont associés aux identifiants d'usagers qui ont été déterminés lors de la première étape principale (i).

Cette détermination se fait dans une autre partie MSPU des moyens de stockage MSi où se trouvent stockées les données définissant les profils des usagers qui sont abonnés au réseau Ri considéré. Il est rappelé qu'un profil d'usager est défini par au moins un attribut, comme par exemple le genre (masculin ou féminin), la catégorie professionnelle, la catégorie d'âge, une éventuelle préférence ou habitude, ou encore le nombre de personnes vivant avec lui (dans son foyer).

Comme cela est illustré non limitativement, cette autre partie MSPU des moyens de stockage MSi peut par exemple être un équipement de stockage qui fait partie du réseau Ri considéré. Il s'agit par exemple d'une base de données à laquelle on peut par exemple accéder via un serveur du réseau Ri considéré, par exemple de type UPS (« User Profile Server »), et dans laquelle sont stockés les identifiants des usagers qui sont abonnés au réseau Ri en correspondance des définitions des profils connus de ces usagers.

Cette deuxième étape principale (ii) peut par exemple être mise en oeuvre par les moyens de calcul MC du dispositif Di qui est associé au réseau Ri considéré.

Les moyens de calcul MC peuvent par exemple adresser au serveur UPS une requête lui demandant de communiquer tous les profils des usagers désignés par des identifiants d'usagers. Le serveur UPS se charge alors de déterminer dans l'équipement MSPU chaque définition de profil d'usager désigné par l'un des identifiants d'usager contenus dans la requête reçue. En réponse à la requête, les moyens de calcul MC reçoivent du serveur UPS un message de réponse contenant un ou plusieurs multiplets comportant chacun au moins un identifiant d'usager et une définition du profil de cet usager.

A réception d'un message de réponse, les moyens de calcul MC peuvent par exemple constituer de nouveaux multiplets comprenant chacun au moins un profil d'usager, l'identifiant de la (micro) cellule dans laquelle a été présent cet usager (déterminé lors de la première étape principale (i)), et l'heure à laquelle le terminal de l'usager a été détecté dans la (micro) cellule identifiée (également déterminée lors de la première étape principale (i)). Il peut alors, par exemple, stocker ces nouveaux multiplets dans des moyens de stockage MSPC qui font éventuellement partie de son dispositif Di (comme illustré non limitativement).

Ce stockage est destiné à permettre des utilisations ultérieures (en différé) des informations recueillies lors des première (i) et deuxième (ii) étapes principales.

Une troisième étape principale (iii) du procédé selon l'invention consiste au moins à calculer pour au moins une partie de zone de couverture des informations statistiques sur les usagers qui ont été présents dans cette partie de zone de couverture, en fonction d'au moins un attribut des profils d'usagers qui ont été déterminés lors d'une deuxième étape principale (ii) pour les usagers qui ont été présents dans cette partie de zone de couverture.

Cette partie obligatoire de la troisième étape principale (iii) peut par exemple être mise en oeuvre par les moyens de calcul MC du dispositif Di qui est associé au réseau Ri considéré. Dans ce cas, les moyens de calcul MC peuvent par exemple déterminer les informations statistiques à partir des informations recueillies lors de première(s) (i) et deuxième(s) (ii) étapes principales et qui sont par exemple stockées sous forme de multiplets dans les moyens de stockage MSPC.

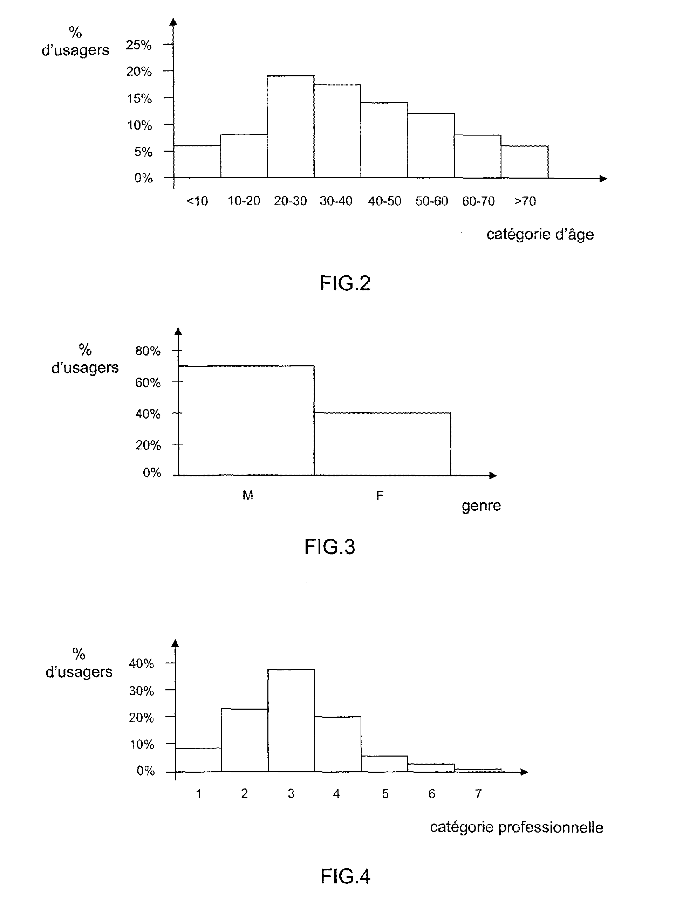

Ces informations statistiques peuvent par exemple constituer des histogrammes du type de ceux qui sont illustrés non limitativement sur les figures 2 à 4. Le premier exemple d'histogramme, illustré sur la figure 2, est ici représentatif du pourcentage d'usagers présents dans une partie d'une zone de couverture en fonction de la catégorie d'âge (inférieure à 10 ans, comprise entre 10 ans et 20 ans, comprise entre 20 ans et 30 ans, comprise entre 30 ans et 40 ans, comprise entre 40 ans et 50 ans, comprise entre 50 ans et 60 ans, comprise entre 60 ans et 70 ans, et supérieure à 70 ans). Le deuxième exemple d'histogramme, illustré sur la figure 3, est ici représentatif du pourcentage d'usagers présents dans une partie d'une zone de couverture en fonction du genre (masculin (M) ou féminin (F)). Le troisième exemple d'histogramme, illustré sur la figure 4, est ici représentatif du pourcentage d'usagers présents dans une partie d'une zone de couverture en fonction de la catégorie professionnelle (ici codée par des valeurs comprises entre 1 et 7).

On notera que d'autres types d'information statistique que des histogrammes peuvent être déterminés dès lors qu'ils sont représentatifs de partie de profil (ou type) d'usagers présents dans au moins une partie d'au moins une zone de couverture d'au moins un réseau Ri. De même, des informations statistiques peuvent être éventuellement relatives à plusieurs attributs de profil d'usager (au moins deux) à la fois. Ainsi, certaines informations statistiques peuvent se présenter sous la forme de corrélations entre des attributs de profils d'usagers.

On notera également que les informations statistiques concernant une même partie de zone de couverture peuvent constituer ensemble un profil de partie de zone de couverture. Les données définissant un tel profil de partie de zone de couverture peuvent par exemple être stockées par les moyens de calcul MC en correspondance d'un identifiant dans des moyens de stockage locaux (c'est-à-dire de leur dispositif Di (ou du réseau Ri associé)), comme par exemple ceux évoqués précédemment et référencés MSPC. Mais, on pourrait également les stocker dans des moyens de stockage communs (c'est-à-dire ne faisant pas partie des différents dispositif Di d'un système S ou bien des différents réseaux Ri auxquels sont associés les différents dispositifs Di d'un système S).

On notera également que les moyens de calcul MC d'un dispositif Di peuvent être agencés de manière à calculer pour une partie de zone de couverture d'un réseau Ri au moins un profil moyen d'usagers en fonction d'une partie commune des profils d'usagers qui ont été déterminés dans cette partie de zone de couverture, éventuellement pour au moins un intervalle de temps choisi. Cette partie commune des profils d'usagers peut par exemple être constituée d'un ou plusieurs attributs communs.

Lorsque l'on veut gérer des usagers qui sont abonnés auprès d'au moins deux réseaux Ri (ici R1 et R2), la troisième étape principale (iii) peut comporter une phase complémentaire consistant à calculer pour au moins une partie de zone de couverture commune à ces réseaux Ri des informations statistiques sur les usagers qui ont été présents dans cette partie de zone de couverture commune. Ce calcul se fait alors en fonction d'au moins un attribut des profils d'usagers qui ont été déterminés dans cette partie de zone de couverture commune par les dispositifs Di associés aux différents réseaux Ri concernés.

Ce calcul peut être effectué par des moyens d'agrégation MA qui, comme illustré, sont externes aux réseaux Ri, peuvent éventuellement faire partie du système S et sont couplés aux différents dispositifs Di dudit système S. On comprendra que ce calcul nécessite que l'on connaisse les zones d'intersection (ou parties communes) des zones de couverture des différents réseaux Ri considérés. Les définitions (coordonnées et identifiants de (micro) cellules) de ces zones d'intersection (ou parties communes) peuvent par exemple être stockées en correspondance d'identifiants de parties communes dans des moyens de stockage MSPI qui peuvent, par exemple, faire partie du système S, comme illustré non limitativement. On notera que les moyens d'agrégation MA peuvent être éventuellement agencés de manière à déterminer eux-mêmes les définitions de zones d'intersection (ou parties communes). Dans ce cas, ils (MA) se servent des définitions des parties de zone de couverture des différents réseaux Ri concernés, par exemple stockées dans les moyens de stockage MSPI, pour déterminer une ou plusieurs définitions de zone d'intersection (ou partie commune).

Lorsque les éventuels moyens d'agrégation MA disposent de la définition d'une zone d'intersection (ou partie commune) pour laquelle ils doivent effectuer une agrégation, ils (MA) interrogent les dispositifs Di qui sont associés aux réseaux Ri dont les zones de couverture comprennent les (micro) cellules participant à cette zone d'intersection, afin de leur demander les informations statistiques (éventuellement les profils de (micro) cellule) qu'ils ont précédemment calculés pour ces (micro) cellules participantes et qui sont stockées dans les moyens de stockage MSPC de leurs dispositifs Di respectifs. On notera que les éventuels moyens d'agrégation MA peuvent éventuellement ne requérir que des informations statistiques relatives à au moins un intervalle de temps choisi. Puis, les moyens d'agrégation MA procèdent à une agrégation de certaines au moins des informations statistiques fournies par les dispositifs Di interrogés, et plus précisément de celles qui concernent le ou les attributs des profils d'usagers qui doivent être pris en considération.

On comprendra que l'agrégation des informations statistiques reçues peut éventuellement nécessiter des traitements mathématiques, par exemple statistiques, lorsque la zone d'intersection (ou partie commune) considérée comprend au moins une sous-partie d'une partie d'une zone de couverture d'un réseau Ri. Par exemple, les moyens d'agrégation MA peuvent considérer des informations statistiques proportionnellement au pourcentage de la surface d'une partie d'une zone de couverture d'un réseau Ri que représente une sous-partie. Cela sous-entend que la répartition des usagers au sein d'une partie d'une zone de couverture d'un réseau Ri est sensiblement homogène.

Une fois que les moyens d'agrégation MA ont déterminé des informations statistiques concernant une zone d'intersection (ou partie commune), ils peuvent par exemple les stocker, en correspondance d'un identifiant de zone d'intersection et d'une éventuelle référence temporelle (intervalle(s) de temps) dans des moyens de stockage MSPI qui peuvent par exemple faire partie du système S, comme illustré non limitativement. On notera que les informations statistiques agrégées concernant une zone d'intersection (ou partie commune) peuvent constituer ensemble un profil de zone d'intersection associé à l'identifiant de cette dernière.

Le procédé selon l'invention peut éventuellement comprendre une quatrième étape (iv) consistant à générer un fichier de données cartographiques affichables et représentatives d'informations statistiques dans au moins une partie de zone de couverture ou au moins une zone d'intersection (ou partie commune). Cette génération de fichier de données cartographiques se fait au moyen d'une mise en correspondance, sur requête, d'au moins une partie d'une zone de couverture ou d'au moins une zone d'intersection (ou partie commune) avec des portions choisies de carte(s) topographique(s) ou géographique(s), par exemple de ville, de quartier(s) de ville, de région(s), de pays ou de bâtiment(s) public(s) ou privé(s).

Cette mise en correspondance est destinée à rapporter sur une (portion de) carte topographique ou géographique des informations statistiques (éventuellement agrégées) relatives à des parties de zone(s) de couverture ou des zones d'intersection (ou parties communes) qui sont situées dans la zone représentée par cette (portion de) carte.

Elle se fait à partir des informations statistiques (éventuellement les profils de (micro) cellule) qui sont stockées dans les moyens de stockage MSPC des dispositifs Di et/ou des informations statistiques (éventuellement les profils de zone d'intersection) qui sont stockées dans les moyens de stockage MSPI du système S.

Comme illustré non limitativement, la génération de fichiers de données cartographiques peut être effectuée par des moyens de génération MG du système S.

Une fois que les moyens de génération MG ont généré un fichier de données cartographiques, ils (MG) peuvent par exemple le stocker, en correspondance d'un identifiant et d'une éventuelle référence temporelle (intervalle(s) de temps), dans des moyens de stockage MSDC qui peuvent par exemple faire partie du système S, comme illustré non limitativement.

On comprendra que les informations statistiques (éventuellement agrégées) et les éventuels fichiers cartographiques peuvent être soit utilisé(e)s par des tiers autorisés, soit déterminé(e)s à la demande de tiers autorisés ou d'applications Aj autorisées (ici j = 1 ou 2). Tout type d'application Aj ayant besoin d'informations statistiques (éventuellement agrégées) et/ou de fichiers cartographiques pour ses besoins applicatifs personnels peut ici accéder au système S, par exemple via des moyens d'accès MAS qui peuvent par exemple faire partie du système S, comme illustré non limitativement.

Par exemple une application Aj peut être destinée à optimiser, automatiquement ou sous le contrôle d'une personne habilitée, des campagnes d'information ou publicitaires sur des moyens d'affichage (de tous types) implantés dans des (micro) cellules (éventuellement mobiles lorsque le point d'accès est un véhicule). On comprendra en effet que les informations statistiques rapportées à des zones dans lesquelles circulent des personnes sont particulièrement utiles pour déterminer efficacement et de façon fiable le type d'information et/ou le type de publicité que l'on peut afficher dans des zones choisies, éventuellement en fonction de l'instant de la journée et/ou du jour de la semaine et/ou de la météorologie,

Dans des applications en temps réel, les fichiers cartographiques peuvent éventuellement permettre d'anticiper le passage d'usagers en certains endroits du fait de l'existence d'une contrainte, comme par exemple un sens interdit, un tunnel ou une sortie de parking ou de bâtiment ou encore de station de métro.

Les moyens d'accès MAS constituent une interface d'accès au système S de type « intelligente » du fait qu'elle est chargée de récupérer auprès des différents constituants du système S les informations statistiques (éventuellement agrégées) et les éventuels fichiers cartographiques dont ont besoin des applications Aj ou bien des tiers habilités.

Les moyens d'accès MAS peuvent par exemple fournir à des ordinateurs de tiers habilités des informations statistiques (éventuellement agrégées) et/ou d'éventuels fichiers cartographiques, à leur demande et via des interfaces graphiques d'usagers (ou GUIs (pour « Graphical User Interfaces »)) IUk (ici k = 1 à 3) implantées dans lesdits ordinateurs (ou moyens de communication analogues) et qui peuvent par exemple faire partie du système S, comme illustré non limitativement.

De telles interfaces graphiques d'usagers IUk sont destinées à permettre à un tiers d'afficher des informations statistiques (éventuellement agrégées) et/ou des fichiers cartographiques sur l'écran d'un ordinateur afin de les analyser et de prendre d'éventuelles décisions, comme par exemple choisir les lieux optimaux d'affichage de publicité d'une marque ou société compte tenu du type ou profil des personnes qui fréquentent ces lieux.

Les moyens de calcul MC et/ou les moyens de génération MG et/ou les éventuels moyens d'agrégation MA et/ou les éventuels moyens d'accès MAS et/ou les éventuelles interfaces graphiques d'usagers IUk selon l'invention peuvent être réalisé(e)s sous la forme de circuits électroniques, de modules logiciels (ou informatiques), ou d'une combinaison de circuits électroniques et de modules logiciels.

Il est important de noter qu'une analyse ou une utilisation applicative peut porter sur des informations statistiques (éventuellement agrégées) et/ou des fichiers cartographiques obtenu(e)s sensiblement en temps réel (éventuellement sur requête expresse) ou bien antérieurement (éventuellement depuis longtemps ou sur au moins un intervalle de temps).

L'invention ne se limite pas aux modes de réalisation de procédé d'obtention d'informations statistiques, de dispositif de traitement et de système décrits ci-avant, seulement à titre d'exemple, mais elle englobe toutes les variantes que pourra envisager l'homme de l'art dans le cadre des revendications ci-après.

## Revendications

1. Procédé d'obtention d'informations statistiques relatives à des usagers de terminaux de communication radio, **caractérisé en ce qu'**il comprend au moins :
- une étape i) consistant à déterminer dans des moyens de stockage (MSi), stockant des identifiants d'usagers, associés à des profils d'usagers définis par au moins un attribut, en correspondance de positions de terminaux de communication radio de ces usagers, propres à se connecter à au moins un réseau de communication sans fil (Ri), les identifiants des usagers dont les terminaux ont été présents dans au moins une partie de la zone de couverture dudit réseau (Ri),
- une étape ii) consistant à déterminer les profils d'usagers associés aux identifiants d'usagers déterminés, et
- une étape iii) consistant à calculer pour ladite partie de zone de couverture des informations statistiques sur les usagers qui ont été présents dans ladite partie, en fonction d'au moins un attribut des profils d'usagers déterminés dans cette partie de zone de couverture.

2. Procédé selon la revendication 1, **caractérisé en ce qu'**il comprend en outre une étape iv) consistant à générer un fichier de données cartographiques affichables et représentatives desdites informations statistiques dans au moins une partie de zone de couverture.

3. Procédé selon l'une des revendications 1 et 2, **caractérisé en ce que** lesdites informations statistiques constituent des profils des parties de zone de couverture.

4. Procédé selon l'une des revendications 1 à 3, **caractérisé en ce qu'**à l'étape i) on détermine dans lesdits moyens de stockage (MSi) les identifiants des usagers dont les terminaux ont été présents pendant une partie au moins d'au moins un intervalle de temps choisi dans au moins une partie d'une zone de couverture dudit réseau (Ri).

5. Procédé selon la revendication 4, **caractérisé en ce que** ledit intervalle de temps choisi est un intervalle qui a débuté à un instant antérieur choisi et qui vient tout juste de se terminer.

6. Procédé selon l'une des revendications 1 à 5, **caractérisé en ce qu'**en présence d'usagers abonnés auprès d'au moins deux réseaux de communication sans fil (Ri), on calcule à l'étape iii) pour au moins une partie de zone de couverture commune auxdits réseaux (Ri) des informations statistiques sur les usagers qui ont été présents dans ladite partie commune, en fonction d'au moins un attribut des profils d'usagers déterminés dans cette partie de zone de couverture commune.

7. Procédé selon l'une des revendications 1 à 6, **caractérisé en ce qu'**à l'étape iii) on calcule pour une partie de zone de couverture au moins un profil moyen d'usagers en fonction d'une partie commune desdits profils d'usagers déterminés dans cette partie de zone de couverture.

8. Procédé selon l'une des revendications 1 à 7, **caractérisé en ce qu'**à l'étape iii) on calcule des informations statistiques constituant des histogrammes.

9. Dispositif de traitement (Di) pour l'obtention d'informations statistiques relatives à des usagers de terminaux de communication radio, **caractérisé en ce qu'**il comprend des moyens de calcul (MC) agencés pour :
- déterminer dans des moyens de stockage (MSi), stockant des identifiants d'usagers, associés à des profils d'usagers définis par au moins un attribut, en correspondance de positions de terminaux de communication radio de ces usagers, propres à se connecter audit réseau de communication sans fil (Ri), les identifiants des usagers dont les terminaux ont été présents dans au moins une partie de la zone de couverture dudit réseau (Ri),
- déterminer les profils d'usagers associés aux identifiants d'usagers déterminés, et
- calculer pour ladite partie de zone de couverture des informations statistiques sur les usagers qui ont été présents dans cette partie, en fonction d'au moins un attribut des profils d'usagers déterminés dans cette partie de zone de couverture.

10. Dispositif selon la revendication 9, **caractérisé en ce que** lesdits moyens de calcul (MC) sont agencés pour calculer des informations statistiques constituant des profils des parties de zone de couverture.

11. Dispositif selon l'une des revendications 9 et 10, **caractérisé en ce que** lesdits moyens de calcul (MC) sont agencés pour déterminer dans lesdits moyens de stockage (MSi) les identifiants des usagers dont les terminaux ont été présents pendant une partie au moins d'au moins un intervalle de temps choisi dans au moins une partie d'une zone de couverture dudit réseau (Ri).

12. Dispositif selon la revendication 11, **caractérisé en ce que** ledit intervalle de temps choisi est un intervalle qui a débuté à un instant antérieur choisi et qui vient tout juste de se terminer.

13. Dispositif selon l'une des revendications 9 à 12, **caractérisé en ce que** lesdits moyens de calcul (MC) sont agencés pour calculer pour une partie de zone de couverture au moins un profil moyen d'usagers en fonction d'une partie commune au moins desdits profils d'usagers déterminés dans cette partie de zone de couverture.

14. Dispositif selon l'une des revendications 9 à 13, **caractérisé en ce que** lesdits moyens de calcul (MC) sont agencés pour calculer des informations statistiques constituant des histogrammes.

15. System (S) pour la génération de fichiers de données cartographiques relatives à au moins une partie d'une zone de couverture d'au moins un réseau de communication sans fil (Ri), **caractérisé en ce qu'**il comprend au moins un dispositif de traitement (Di) selon l'une des revendications 9 à 14, associé à au moins un réseau (Ri), et des moyens de génération (MG) agencés pour générer un fichier de données cartographiques représentatives d'informations statistiques dans au moins une partie d'une zone de couverture dudit réseau (Ri), déterminées par au moins un dispositif de traitement (Di), et propres à être affichées.

16. System selon la revendication 15, **caractérisé en ce qu'**en présence d'usagers abonnés auprès d'au moins deux réseaux de communication sans fil (Ri), il comprend des dispositifs de traitement (Di) associés respectivement auxdits réseaux (Ri), et des moyens d'agrégation (MA) agencés pour calculer pour au moins une partie de zone de couverture commune auxdits réseaux (Ri) des informations statistiques sur les usagers qui ont été présents dans ladite partie commune, à partir desdites informations statistiques calculés par lesdits dispositifs de traitement (Di) dans lesdites parties de zone de couverture desdits réseaux (Ri).

17. Utilisation du procédé selon l'une des revendications 1 à 8, du dispositif de traitement (Di) selon l'une des revendications 9 à 14, et du système (S) selon l'une des revendications 15 et 16 pour l'optimisation de campagnes publicitaires sur des moyens d'affichage.
